# FASCICULE DE BREVET EUROPEEN

(11) **EP 0 951 411 B1**
(45) Date de publication et mention de la délivrance du brevet: **17.07.2002**
(21) Numéro de dépôt: 98955693.1
(22) Date de dépôt: 19.11.1998
(51) Int. Cl.: B60S 1/34

(54) **ESSUIE-GLACE DE VEHICULE AUTOMOBILE COMPORTANT UN RESSORT POUR GENERER UNE PRESSION D'ESSUYAGE**
SCHEIBENWISCHER FÜR EIN KRAFTFAHRZEUG MIT EINER FEDER ZUR ERZEUGUNG EINES WISCHDRUCKES
MOTOR VEHICLE WIPER COMPRISING A SPRING FOR GENERATING WIPING PRESSURE

(30) Priorité: 20.11.1997 FR 9714696
(43) Date de publication de la demande: 27.10.1999
(73) Titulaire: VALEO SYSTEMES D'ESSUYAGE, 78321 La Verrière (FR)
(72) Inventeur: RAYNAUD, Richard, F-63320 Champeix (FR)
(74) Mandataire: Lemaire, Marc
(86) Numéro de dépôt international: FR9802467
(87) Numéro de publication internationale: WO9926817

(56) Documents cités:
- EP-A- 0 723 898
- FR-A- 1 183 874
- US-A- 2 964 774
- US-A- 3 344 458

## Description

L'invention se rapporte à un essuie-glace de véhicule automobile comportant un ressort pour générer une pression d'essuyage.

L'invention se rapporte plus particulièrement à un essuie-glace de véhicule automobile, du type comportant une tête d'entraînement destinée à être fixée à une extrémité supérieure libre d'un arbre d'entraînement de l'essuie-glace au niveau d'un alésage, du type comportant un bras d'essuie-glace qui est articulé sur la tête d'entraînement par une extrémité longitudinale arrière, autour d'un axe transversal qui est sensiblement perpendiculaire à la direction longitudinale générale de l'essuie-glace et qui est perpendiculaire à l'axe de l'arbre d'entraînement, entre une position relevée et une position de service vers laquelle il est rappelé par un ressort hélicoïdal de compression interposé entre la tête d'entraînement et une surface d'appui du bras.

Dans un tel essuie-glace, le bras d'essuie-glace porte, à une extrémité longitudinale avant, un balai d'essuie-glace qui est muni d'une raclette d'essuyage destinée à venir au contact de la vitre à essuyer. La raclette d'essuyage est réalisée en matériau souple et elle est par exemple portée par une structure articulée du balai de manière à pouvoir épouser le galbe de la vitre lorsque celle-ci est bombée.

Aussi, pour que la raclette d'essuyage épouse au mieux la courbure de la vitre, il est nécessaire que le bras d'essuie-glace exerce sur le balai une pression d'essuyage tendant à plaquer la raclette contre la vitre, ceci étant assuré par un ressort de pression d'essuyage qui sollicite le bras d'essuie-glace vers sa position de service.

Selon une conception classique du ressort de pression d'essuyage, celui-ci est réalisé sous la forme d'un ressort hélicoïdal de traction qui est accroché par une première extrémité sur le bras et par l'autre extrémité sur la tête d'entraînement selon une ligne d'action sensiblement longitudinale telle que, lorsque le bras est au voisinage de sa position de service, le ressort tend à solliciter le bras de manière à ce que celui-ci plaque la raclette contre la vitre, et, au contraire, lorsque le bras est proche de sa position relevée, le ressort agit sur le bras de manière à l'amener en appui contre des moyens de butée qui définissent cette position relevée.

Selon une telle conception d'un essuie-glace, il est toutefois nécessaire de prévoir que la partie arrière du bras de l'essuie-glace soit suffisamment large selon la direction transversale pour pouvoir accueillir le ressort hélicoïdal de traction qui, de plus, est généralement d'une longueur relativement importante.

Par ailleurs, il a déjà été proposé, par exemple dans le document DE-A-35.08.542, un essuie-glace dont le bras comporte une partie arrière qui recouvre la tête d'entraînement, qui est articulée autour d'un axe transversal agencé à l'avant de la tête d'entraînement par rapport à l'arbre d'entraînement sur lequel est montée la tête, et dans lequel un ressort de compression est agencé à l'arrière de la tête d'entraînement pour coopérer avec une surface d'appui du bras qui s'étend au-dessus du ressort afin de solliciter le bras en rotation autour de son axe d'articulation sur la tête d'entraînement vers sa position de service.

Une telle disposition présente notamment l'inconvénient d'allonger de manière importante la tête d'entraînement vers l'arrière, c'est-à-dire à l'opposé de la partie réellement utile de l'essuie-glace. Cela est d'autant plus gênant qu'il est nécessaire de tenir compte du fait que cette excroissance longitudinale vers l'arrière possède un débattement angulaire en rotation autour de l'axe de l'arbre d'entraînement égal à celui de l'essuie-glace, ce qui rend nécessaire de prévoir un espace dégagé correspondant.

L'invention a donc pour objet de proposer une nouvelle conception des moyens pour imposer une pression d'essuyage au balai d'essuie-glace, ces moyens permettant de concevoir un essuie-glace le plus compact possible.

Par ailleurs, l'invention a pour objet de proposer, dans le cadre d'un essuie-glace comportant un ressort de pression d'essuyage qui travaille en compression, des moyens qui permettent de maintenir le bras d'essuie-glace en position relevée, notamment afin de faciliter l'opération de remplacement du balai d'essuie-glace.

Dans ce but, l'invention propose un essuie-glace du type décrit précédemment, caractérisé en ce que le ressort hélicoïdal de compression s'étend autour de l'alésage.

Selon d'autres modes de réalisation de l'invention :
- le ressort s'étend au moins en partie autour d'un plot cylindrique de la tête dans lequel est aménagé l'alésage destiné à recevoir l'extrémité supérieure de l'arbre d'entraînement ;
- la surface d'appui du bras est une surface annulaire qui est agencée au-dessus de l'arbre d'entraînement, qui est tournée vers le bas et contre laquelle s'appuie une extrémité supérieure du ressort ;
- l'extrémité inférieure du ressort est en appui contre une surface d'appui de la tête d'entraînement ;
- la surface d'appui de la tête est formée au fond d'une gorge sensiblement annulaire ;
- l'essuie-glace comporte des moyens de verrouillage du bras en position relevée ;
- l'essuie-glace comporte un levier de verrouillage qui est mobile par rapport à la tête, et qui est sollicité par des moyens élastiques de manière à coopérer, lorsque le bras est en position relevée, avec une surface complémentaire du bras pour maintenir celui-ci en position relevée ;
- les moyens élastiques comportent le ressort de compression qui est en appui, par une extrémité inférieure, sur une surface d'actionnement du levier qui est interposée entre l'extrémité inférieure de ressort et la surface d'appui de la tête ;
- la surface d'actionnement du levier de verrouillage est formée sur une couronne annulaire, qui repose contre une surface d'appui de la tête d'entraînement et qui est d'axe sensiblement parallèle à celui de l'arbre d'entraînement lorsque le levier est dans une position de repos, et le levier comporte une patte de verrouillage qui s'étend sensiblement vers le haut depuis la couronne, du côté arrière par rapport à la tête d'entraînement, de telle sorte qu'une extrémité libre de la patte, formant décrochement, est susceptible d'être engagée dans un logement complémentaire du bras lorsque celui-ci est en position relevée ;
- lorsque le bras est amené de sa position de service vers sa position relevée, l'extrémité libre de la patte du levier glisse le long d'un pan incliné du bras qui provoque le basculement du levier de manière à comprimer le ressort de compression.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues partielles en coupe longitudinale d'une partie arrière d'un premier mode de réalisation d'un essuie-glace conforme aux enseignements de l'invention, le bras étant représenté respectivement en position de service et en position relevée; et
- les figures 3 et 4 sont des vues similaires à celles des figures 1 et 2 illustrant un essuie-glace comportant des moyens perfectionnés de verrouillage en position relevée.

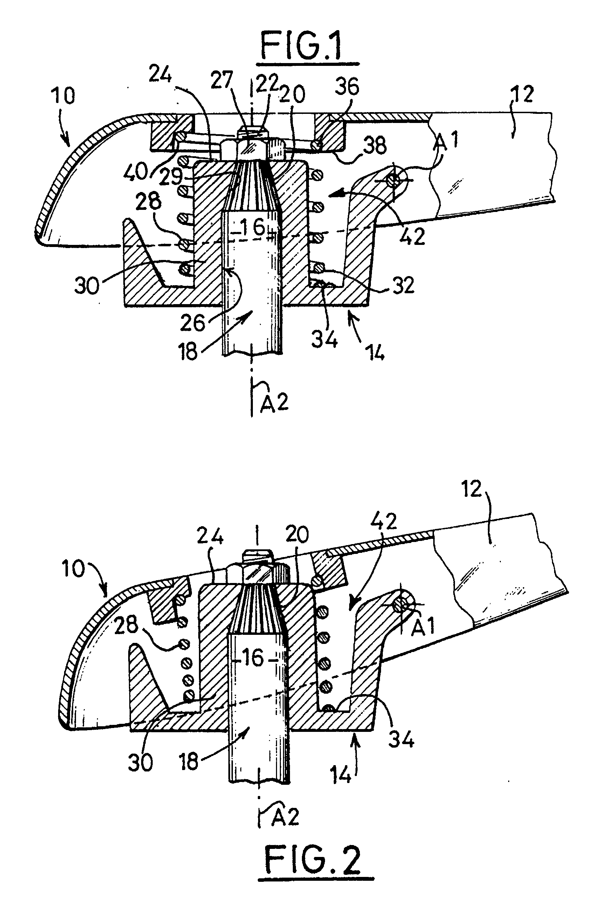

On a représenté sur les figures 1 et 2 l'extrémité longitudinale arrière 10 d'un bras d'essuie-glace 12 dont l'extrémité longitudinale avant (non représentée) est par exemple destinée à porter un balai d'essuie-glace.

De manière connue, l'extrémité arrière 10 du bras 12 est montée articulée autour d'un axe transversal A1 sur une tête d'entraînement 14. La tête d'entraînement 14 est elle-même montée de manière fixe sur l'extrémité supérieure 16 d'un arbre d'entraînement 18 d'axe A2 qui est représenté en position verticale sur les figures 1 et 2, et qui est sensiblement perpendiculaire à une vitre à essuyer (non représentée).

L'extrémité supérieure 16 de l'arbre 18 comporte un tronçon tronconique 20 d'axe A2 qui se rétrécit vers le haut et qui est prolongé par un tronçon cylindrique fileté 22.

La tête d'entraînement 14 comporte un alésage 26 dans lequel est engagée l'extrémité supérieure 16 de l'arbre 18. L'alésage 26, d'axe A2, débouche à ses deux extrémités axiales et il est de forme complémentaire de celle de l'extrémité supérieure de l'arbre 18 de telle sorte que le tronçon fileté 22 de l'arbre 18 s'étend au-dessus d'une face supérieure 24 de la tête d'entraînement. De manière connue, un écrou 27 est vissé sur le tronçon fileté 22, en appui contre la face supérieure 24 de manière à solliciter la tête d'entraînement 14 vers le bas par rapport à l'arbre 18 et à amener en appui une partie tronconique 29 de l'alésage 26 avec le tronçon tronconique 20 de l'arbre 18 pour immobiliser la tête d'entraînement 14 par rapport à l'arbre 18.

Par ailleurs, le tronçon tronconique 20 de l'arbre 18 peut être cannelé de manière à immobiliser en rotation autour de l'axe A2 la tête d'entraînement 14 par rapport à l'arbre 18.

L'arbre 18 est entraîné en rotation autour de son axe A2 par un mécanisme d'entraînement de l'essuie-glace (non représenté) qui impose ainsi à un ensemble comportant l'arbre 18, la tête d'entraînement 14 et le bras 12 un mouvement de balayage rotatif alterné autour de l'axe A2.

De manière connue, grâce à son articulation sur la tête d'entraînement 14, le balai 12 peut être amené d'une position de service, illustrée à la figure 1 et dans laquelle il s'étend longitudinalement sensiblement perpendiculairement à l'axe A2 de manière à plaquer le balai d'essuie-glace contre la vitre à essuyer, à une position relevée illustrée à la figure 2 et dans laquelle la partie avant du bras 12 est soulevée vers le haut, de manière à éloigner l'extrémité longitudinale avant du bras 12 de la vitre.

Comme on peut le voir sur les figures, l'axe transversal d'articulation du bras 12 est agencé longitudinalement vers l'avant sur la tête d'entraînement 14 par rapport à l'axe A2 de l'arbre d'entraînement 18 et de l'alésage 26. Aussi, lorsque le bras 12 est soulevé vers sa position relevée, l'extrémité longitudinale arrière 10 du bras 12, qui recouvre entièrement la tête d'entraînement 14, tend à descendre, c'est-à-dire à se rapprocher de la tête d'entraînement 14.

Conformément aux enseignements de l'invention, la pression d'essuyage, c'est-à-dire la force exercée par le bras 12 sur le balai afin que celui-ci puisse nettoyer de manière efficace la vitre, est exercée par un ressort hélicoïdal de compression 28 qui est agencé de manière à être, au moins lorsque le bras 12 est en position de service, sensiblement coaxial à l'arbre 18 autour de l'extrémité supérieure 16 de celui-ci.

Comme on peut le voir sur les figures, le ressort 28 s'étend, sur une majeure partie de sa longueur, autour d'un plot cylindrique 30 d'axe A2 de la tête 14, dans lequel est aménagé l'alésage 26 et qui est délimité vers le haut par la surface supérieure 24 de la tête. Le ressort 28 est en appui par son extrémité inférieure 32 contre une surface d'appui 34 de la tête d'entraînement 14 et, par son extrémité supérieure 36, contre une surface d'appui 40 aménagée sur le bras 12, au-dessus de l'extrémité supérieure 16 de l'arbre 18.

La surface d'appui 34 de la tête d'entraînement 14 est une surface annulaire perpendiculaire à l'axe A2 qui s'étend autour de la base du plot cylindrique 30. Dans l'exemple de réalisation illustré sur les figures, la surface d'appui annulaire 34 de la tête 14 forme le fond d'une gorge sensiblement annulaire 42 de la tête 14 qui entoure le plot 30. La gorge 42 est ouverte vers le haut.

Ainsi, le ressort de compression 28, par son action, tend à faire pivoter le bras 12 autour de l'axe A1, dans le sens horaire en considérant les figures, ce qui permet au bras 12 d'imposer au balai la force nécessaire à l'essuyage de la vitre.

Lorsque le bras 12 est amené vers sa position relevée, son extrémité arrière 10 se rapproche de la tête d'entraînement, ce qui augmente la compression du ressort 28, de sorte que le ressort 28 exerce bien une pression qui tend à ramener le bras 12 de sa position relevée vers sa position de service.

Comme on peut le voir plus particulièrement sur la figure 2, la surface d'appui 40 du bras 12, contre laquelle s'appuie l'extrémité supérieure 36 du ressort 28, est aménagée dans une collerette annulaire 38 qui est solidaire du bras 12 et qui maintien l'extrémité supérieure 36 du ressort 28 radialement par rapport à l'axe A2. La collerette 38 peut être réalisée venue de manière avec le bras 12 ou, comme cela est illustré sur les figures, sous la forme d'une pièce rapportée.

Ainsi, bien que le ressort 28 subisse une certaine déflexion radiale lorsque le bras est amené vers sa position relevée, l'extrémité supérieure 36 ne peut riper et s'échapper de la surface d'appui 40. Bien entendu, l'extrémité inférieure 32 du ressort 28 est immobilisée radialement par le plot cylindrique 30.

Grâce à la disposition du ressort 28 selon l'invention, l'encombrement de celui-ci se trouve fortement limité et la tête d'entraînement 14 ainsi que l'extrémité arrière 10 du bras 12 peuvent être de dimensions réduites, notamment dans la direction longitudinale, et plus particulièrement encore en arrière de l'axe A2 de l'arbre d'entraînement 18 et de l'alésage 26. De plus, cette disposition du ressort 28 permet d'obtenir une course angulaire du bras 12 relativement importante entre ses positions de service et relevée.

Par ailleurs, le plot cylindrique 30 forme un parfait moyen de guidage du ressort 30 qui évite notamment tout problème de flambement du ressort 28.

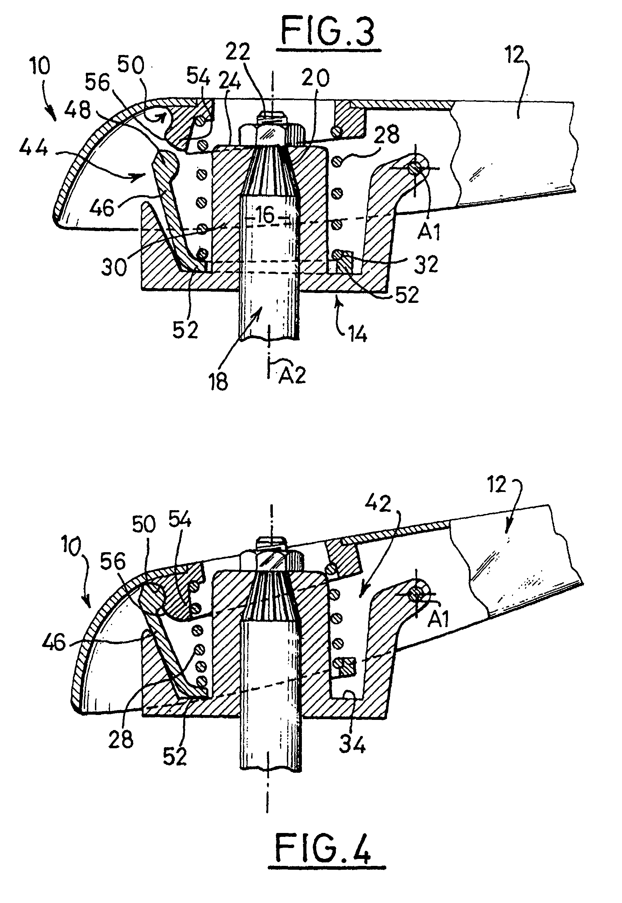

Un autre objet de l'invention est de proposer des moyens permettant de maintenir le bras 12 en position relevée, notamment pour faciliter l'opération de remplacement du balai d'essuie-glace. Un exemple de réalisation d'un essuie-glace comportant de tels moyens est illustré aux figures 3 et 4 dans lesquelles des éléments identiques ou similaires à ceux illustrés aux figures 1 et 2 sont désignés par les mêmes chiffres de référence.

Comme on peut le voir dans cet exemple de réalisation, il est prévu un levier de verrouillage 44 qui est muni d'une patte de verrouillage 46 dont une extrémité libre 48 est destinée à coopérer avec un logement 50 de forme complémentaire aménagée dans le bras 12 pour maintenir celui-ci en position relevée.

Le bras 12, la tête d'entraînement 14 et l'arbre 18 sont sensiblement identiques à ceux décrits en rapport avec le premier mode de réalisation des figures 1 et 2.

Le levier 44 comporte une couronne annulaire 52 qui est en appui au fond de la gorge 42, contre la surface d'appui 34, et qui est agencée de telle sorte que l'extrémité inférieure 32 du ressort 28 est en appui contre une face supérieure de cette couronne annulaire 52. Lorsque le bras est en position de service, la couronne est donc plaquée contre la surface d'appui 34 et son axe est donc sensiblement confondu avec celui de l'arbre 18.

La patte 46 s'étend vers le haut depuis la couronne 52, du côté arrière de la tête d'entraînement 14, et elle est légèrement inclinée vers l'arrière. L'extrémité 48 de la patte 46 forme une excroissance qui est dirigée radialement vers l'axe A2 de l'arbre 18, vers l'avant de la tête d'entraînement 14.

La collerette 38 du bras 12, dans laquelle est formée la surface d'appui 40 pour l'extrémité supérieure 36 du ressort 28, est munie, en correspondance avec la patte 46, d'un bec 54 qui présente un pan incliné 56, tourné vers le bas et vers l'arrière du bras et au-dessus duquel est aménagé, sous la forme d'un renfoncement, le logement 50 dans lequel est destinée à être reçue l'extrémité libre 48 de la patte 46. Le logement 50 est ouvert vers l'arrière.

Lorsque le bras 12 est amené vers sa position relevée, le pan incliné 56 est destiné à venir au contact de l'extrémité libre 48 de la patte 46 et, du fait qu'il est tourné vers l'arrière, il tend à provoquer un basculement du levier 44 sensiblement autour d'un axe transversal passant par une zone de jonction liant la patte 46 à la couronne 52.

Le basculement du levier 44, dans le sens anti-horaire en considérant les figures, tend à provoquer une compression supplémentaire du ressort 28. Ainsi, le ressort de compression 28 assure non seulement la pression d'essuyage de l'essuie-glace mais aussi le retour du levier 44 vers sa position de repos illustrée à la figure 1.

L'angle de basculement du levier 44 augmente tant que l'extrémité libre 48 de la patte 46 n'a pas dépassé l'extrémité supérieure du pan incliné 56. Une fois que l'extrémité libre 48 a dépassé le bec 54, le ressort de compression 28, par son action sur la couronne 52, tend à forcer l'extrémité libre 48 à l'intérieur du renfoncement 50 aménagé au-dessus du bec 54.

Ainsi, comme on peut le voir à la figure 4, les formes complémentaires de l'extrémité libre 48 et du logement 50 assurent, de manière automatique, un blocage du bras 12 en position relevée. De préférence, ces formes complémentaires sont toutefois prévues pour permettre à l'extrémité libre 48 de se dégager du logement 50 lorsque l'utilisateur applique une pression suffisante sur le bras 12 dans le sens d'un retour vers sa position de service.

La conception des moyens de verrouillage du bras en position relevée ici présentée est donc particulièrement avantageuse car elle est d'un encombrement particulièrement réduit et elle utilise comme moyen de rappel du levier 44 en position de repos le ressort de compression 28 utilisé pour fournir au balai 12 la force de pression d'essuyage.

## Revendications

1. Essuie-glace de véhicule automobile, du type comportant une tête d'entraînement (14) destinée à être fixée à une extrémité supérieure libre (16) d'un arbre d'entraînement (18) de l'essuie-glace au niveau d'un alésage (26), du type comportant un bras d'essuie-glace (12) qui est articulé sur la tête d'entraînement (14) par une extrémité longitudinale arrière (10), autour d'un axe transversal (A1) qui est sensiblement perpendiculaire à la direction longitudinale générale de l'essuie-glace et qui est perpendiculaire à l'axe (A2) de l'arbre d'entraînement (18), entre une position relevée et une position de service vers laquelle il est rappelé par un ressort hélicoïdal de compression (28) interposé entre la tête d'entraînement (14) et une surface d'appui (40) du bras (12),
**caractérisé en ce que** le ressort hélicoïdal de compression (28) s'étend autour de l'alésage (26).

2. Essuie-glace selon la revendication 1, **caractérisé en ce que** le ressort (28) s'étend au moins en partie autour d'un plot cylindrique (30) de la tête (14) dans lequel est aménagé l'alésage (26) destiné à recevoir l'extrémité supérieure (16) de l'arbre d'entraînement (18).

3. Essuie-glace selon l'une quelconque des revendications précédentes, **caractérisé en ce que** la surface d'appui (40) du bras (12) est une surface annulaire qui est agencée au-dessus de l'arbre d'entraînement (18), qui est tournée vers le bas et contre laquelle s'appuie une extrémité supérieure (36) du ressort (12).

4. Essuie-glace selon l'une quelconque des revendications précédentes, **caractérisé en ce que** l'extrémité inférieure (32) du ressort (28) est en appui contre une surface d'appui (34) de la tête d'entraînement (14).

5. Essuie-glace selon la revendication 4, **caractérisé en ce que** la surface d'appui (34) de la tête (14) est formée au fond d'une gorge sensiblement annulaire (42).

6. Essuie-glace selon l'une quelconque des revendications précédentes, **caractérisé en ce que** l'essuie-glace comporte des moyens (44) de verrouillage du bras (12) en position relevée.

7. Essuie-glace selon la revendication 6, **caractérisé en ce que** l'essuie-glace comporte un levier de verrouillage (44) qui est mobile par rapport à la tête (14), et qui est sollicité par des moyens élastiques (28) de manière à coopérer, lorsque le bras (12) est en position relevée, avec une surface complémentaire (50) du bras (12) pour maintenir celui-ci en position relevée.

8. Essuie-glace selon la revendication 7, **caractérisé en ce que** les moyens élastiques comportent le ressort de compression (28) qui est en appui, par une extrémité inférieure (32), sur une surface d'actionnement (52) du levier (44) qui est interposée entre l'extrémité inférieure (32) de ressort (28) et la surface d'appui (34) de la tête (14).

9. Essuie-glace selon la revendication 8, **caractérisé en ce que** la surface d'actionnement du levier de verrouillage (44) est formée sur une couronne annulaire (52), qui repose contre une surface d'appui de la tête d'entraînement (34) et qui est d'axe sensiblement parallèle à celui (A2) de l'arbre d'entraînement (18) lorsque le levier (44) est dans une position de repos, et **en ce que** le levier (44) comporte une patte de verrouillage (46) qui s'étend sensiblement vers le haut depuis la couronne (52), du côté arrière par rapport à la tête d'entraînement (14), de telle sorte qu'une extrémité libre (48) de la patte, formant décrochement, est susceptible d'être engagée dans un logement complémentaire (50) du bras (12) lorsque celui-ci est en position relevée.

10. Essuie-glace selon la revendication 9, **caractérisé en ce que**, lorsque le bras (12) est amené de sa position de service vers sa position relevée, l'extrémité libre (48) de la patte (46) du levier (44) glisse le long d'un pan incliné (56) du bras (12) qui provoque le basculement du levier (44) de manière à comprimer le ressort de compression (28).

## Patentansprüche

1. Scheibenwischer für Kraftfahrzeug des Typs mit einem Antriebskopf (14), der an einem oberen freien Ende (16) einer Scheibenwischer-Antriebswelle (18) in einer Bohrung (26) befestigt werden soll, des Typs mit einem Scheibenwischerarm (12), der an den Antriebskopf (14) an einem hinteren Längsende (10) um eine Querachse (A1) herum angelenkt ist, die etwa lotrecht zur allgemeinen Längsrichtung des Scheibenwischers verläuft und die lotrecht zur Achse (A2) der Antriebswelle ist (18), zwischen einer angehobenen Position und einer Betriebsposition, in die sie durch eine Schraubendruckfeder (28) zurückgestellt wird, die zwischen dem Antriebskopf (14) und einer Stützfläche (40) des Arms (12) angeordnet ist, **dadurch gekennzeichnet, dass** sich die Schraubendruckfeder (28) um die Bohrung (26) herum erstreckt.

2. Scheibenwischer nach Anspruch 1, **dadurch gekennzeichnet, dass** sich die Feder (28) zumindest teilweise um einen Zylinderstift (30) des Kopfs (14) herum erstreckt, in dem die Bohrung (26) vorgesehen ist, die das obere Ende (16) der Antriebswelle (18) aufnehmen soll.

3. Scheibenwischer nach einem der vorgenannten Ansprüche, **dadurch gekennzeichnet, dass** die Stützfläche (40) des Arms (12) eine ringförmige, über der Antriebswelle (18) vorgesehene Fläche ist, die nach unten gerichtet ist und gegen die sich ein oberes Ende (36) der Feder (12) abstützt.

4. Scheibenwischer nach einem der vorgenannten Ansprüche, **dadurch gekennzeichnet, dass** sich das untere Ende (32) der Feder (28) gegen eine Stützfläche (34) des Antriebskopfs (14) stützt.

5. Scheibenwischer nach Anspruch 4, **dadurch gekennzeichnet, dass** die Stützfläche (34) des Kopfs (14) am Boden eines etwa ringförmigen Halses (42) ausgebildet ist.

6. Scheibenwischer nach einem der vorgenannten Ansprüche, **dadurch gekennzeichnet, dass** der Scheibenwischer Verriegelungsmittel (44) des Arms (12) in angehobener Position umfasst.

7. Scheibenwischer nach Anspruch 6, **dadurch gekennzeichnet, dass** der Scheibenwischer einen in Bezug auf den Kopf (14) mobilen Verriegelungshebel (44) umfasst, der von elastischen Mitteln (28) beaufschlagt wird, um, wenn sich der Arm (12) in angehobener Position befindet, mit einer den Arm (12) ergänzenden Fläche (50) zusammenzuwirken, um ihn in der angehobenen Position festzuhalten.

8. Scheibenwischer nach Anspruch 7, **dadurch gekennzeichnet, dass** die elastischen Mittel die Druckfeder (28) umfassen, die sich mit einem unteren Ende (32) auf einer Betätigungsfläche (52) des Hebels (44) abstützt, die sich zwischen dem unteren Ende (32) der Feder (28) und der Stützfläche (34) des Kopfs (14) befindet.

9. Scheibenwischer nach Anspruch 8, **dadurch gekennzeichnet, dass** die Betätigungsfläche des Verriegelungshebels (44) auf einer ringförmigen Krone (52) ausgebildet ist, die an einer Stützfläche des Antriebskopfs (34) anliegt, und deren Achse etwa parallel zu derjenigen (A2) der Antriebswelle (18) verläuft, wenn sich der Hebel (44) in einer Ruheposition befindet, und dass der Hebel (44) eine Verriegelungslasche (46) aufweist, die sich von der Krone (52) aus etwa nach oben erstreckt, auf der hinteren Seite in Bezug auf den Antriebskopf (14), so dass ein freies, einen Absatz bildendes Ende (48) der Lasche in eine den Arm (12) ergänzende Aufnahme (50) eingeführt werden kann, wenn er sich in angehobener Position befindet.

10. Scheibenwischer nach Anspruch 9, **dadurch gekennzeichnet, dass** wenn der Arm (12) aus seiner Betriebsposition in seine angehobene Position gebracht wird, das freie Ende (48) der Lasche (46) des Hebels (44) entlang einer Schräge (56) des Arms (12) gleitet, was das Schwenken des Hebels (44) bewirkt, so dass die Druckfeder (28) zusammengedrückt wird.

## Claims

1. A motor vehicle wiper of the type having a drive head (14) intended to be fixed to a free top end (16) of a drive shaft (18) for the wiper at a bore (26), of the type having a wiper arm (12) articulated on the drive head (14) by means of a rear longitudinal end (10), about a transverse axis (A1) which is substantially perpendicular to the general longitudinal direction of the wiper and which is perpendicular to the axis (A2) of the drive shaft (18), between a raised position and a service position towards which it is returned by a helical compression spring (28) interposed between the drive head (14) and a bearing surface (40) of the arm (12),
**characterised in that** the helical compression spring (28) extends around the bore (26).

2. A wiper according to Claim 1, **characterised in that** the spring (28) extends at least partly around a cylindrical stud (30) on the head (14) in which there is arranged the bore (26) intended to receive the top end (16) of the drive shaft (18).

3. A wiper according to any one of the preceding claims, **characterised in that** the bearing surface (40) on the arm (12) is an annular surface which is arranged above the drive shaft (18), which is turned downwards and against which a top end (36) of the spring (12) bears.

4. A wiper according to any one of the preceding claims, **characterised in that** the bottom end (32) of the spring (28) is in abutment against a bearing surface (34) on the drive head (14).

5. A wiper according to Claim 4, **characterised in that** the bearing surface (34) on the head (14) is formed at the bottom of a substantially annular groove (42).

6. A wiper according to any one of the preceding claims, **characterised in that** the wiper has means (44) of locking the arm (12) in the raised position.

7. A wiper according to Claim 6, **characterised in that** the wiper has a locking lever (44) which is able to move with respect to the head (14), and which is acted on by elastic means (28) so as to cooperate, when the arm (12) is in the raised position, with a complementary surface (50) on the arm (12) in order to keep the latter in the raised position.

8. A wiper according to Claim 7, **characterised in that** the elastic means include the compression spring (28) which is in abutment, through a bottom end (32), on a surface (52) for actuating the lever (44) which is interposed between the bottom end (32) of the spring (28) and the abutment surface (34) of the head (14).

9. A wiper according to Claim 8, **characterised in that** the actuation surface for the locking lever (44) is formed on an annular ring (52), which rests against an abutment surface on the drive head (34) and which has its axis substantially parallel to that (A2) of the drive shaft (18) when the lever (44) is in an idle position, and **in that** the lever (44) has a locking lug (46) which extends substantially upwards from the ring (52), on the rear side with respect to the drive head (14), so that a free end (48) of the lug, forming a step, is able to be engaged in a complementary housing (50) in the arm (12) when the latter is in the raised position.

10. A wiper according to Claim 9, **characterised in that**, when the arm (12) is brought from its service position to its raised position, the free end (48) of the lug (46) on the lever (44) slides along an inclined surface (56) of the arm (12), which causes the tilting of the lever (44) so as to compress the compression spring (28).
